# EUROPÄISCHE PATENTANMELDUNG

(11) **EP 1 398 605 A1**
(43) Veröffentlichungstag der Anmeldung: **17.03.2004**
(21) Anmeldenummer: 03010465.7
(22) Anmeldetag: 09.05.2003
(51) Int. Cl.: G01F 23/284

(54) **Füllstandsmessgerät**

(30) Priorität: 29.08.2002 DE 10240550
(71) Anmelder: Krohne S.A., 26103 Romans - Cedex (FR)
(72) Erfinder: Bletz, Achim, Dipl.-Ing., 26260 Clerieux (FR); Quattländer, Ralf, 78054 Villingen-Schwenningen (DE)
(74) Vertreter: Gesthuysen, von Rohr & Eggert

(57) **Zusammenfassung**

Dargestellt und beschrieben ist ein Füllstandsmeßgerät, das nach dem Radarprinzip arbeitet, zum Messen des Füllstands eines in einem Behälter (1) eingefüllten Mediums, mit einem Signalgenerator (2) zum Erzeugen und Aussenden eines elektromagnetischen Signals, einer elektrischen Leiteranordnung (3) zum Führen des von dem Signalgenerator (2) erzeugten elektromagnetischen Signals in den Behälter (1) und zum Zurückführen des an dem in den Behälter (1) eingefüllten Medium reflektierten Anteils des elektromagnetischen Signals und einer Auswerteelektronik (4) zum Empfangen des an dem in den Behälter (1) eingefüllten Medium reflektierten Anteils des elektromagnetischen Signals und zum Ermitteln dessen Laufzeit und damit des Füllstands des Mediums in dem Behälter (1).

Erfindungsgemäß ist ein von der Leiternanordnung (3) verschiedener Meßwertaufnehmer (5) zur Messung einer weiteren physikalischen Größe vorgesehen. Damit wird die Funktionalität des erfindungsgemäßen Füllstandsmeßgeräts erhöht.

## Beschreibung

Die Erfindung betrifft ein Füllstandsmeßgerät, das nach dem Radarprinzip arbeitet, zum Messen des Füllstands eines in einen Behälter eingefüllten Mediums, mit einem Signalgenerator zum Erzeugen und Aussenden eines elektromagnetischen Signals, einer elektrischen Leiteranordnung zum Führen des von dem Signalgenerator erzeugten elektromagnetischen Signals in den Behälter und zum Zurückführen des an dem in den Behälter eingefüllten Medium reflektierten Anteils des elektromagnetischen Signals und einer Auswerteelektronik zum Empfangen des an dem in den Behälter eingefüllten Medium reflektierten Anteils des elektromagnetischen Signals und zum Ermitteln dessen Laufzeit und damit des Füllstands des Mediums in dem Behälter.

Das Meßverfahren eines Füllstandsmeßgeräts, das nach dem Radarprinzip arbeitet, basiert auf dem TDR-Meßprinzip (Time Domaine Reflectometry), das z.B. aus dem Bereich der Kabelprüfung bekannt ist und Ähnlichkeit mit der Funktionsweise von herkömmlichen Radargeräten aufweist. Bei einem solchen TDR-Füllstandsmeßgerät wird z.B. ein extrem kurzer elektrischer Impuls über eine im wesentlichen gerade verlaufende elektrische Leiteranordnung in einen Behälter ausgesandt, in dem sich ein Medium, wie eine Flüssigkeit, ein Pulver oder ein Granulat befindet, dessen Füllstandshöhe bestimmt werden soll. Dabei ist typischerweise eine solche elektrische Leiteranordnung vorgesehen, die in das Medium hineinreicht und als Einfachleiter oder als Doppelleiter ausgeführt ist. Ist die elektrische Leiteranordnung als Doppelleiter ausgeführt, so kann sie z.B. zwei parallel zueinander verlaufende Leiter aufweisen oder als Koaxialleitung ausgebildet sein.

Ein in eine solche aus einem Doppelleiter bestehende elektrische Leiteranordnung eingekoppelter elektrischer Impuls läuft dann quasi "zwischen" den beiden Leitern in den Behälter hinein und wird dann an der Oberfläche des Mediums zumindest teilweise reflektiert, wobei der reflektierte Anteil des kurzen elektrischen Impulses von der Auswerteelektronik empfangen wird. Der reflektierte Anteil des kurzen elektrischen Impulses hängt von der Dielektrizitätszahl des Mediums ab und steigt mit dieser. Dabei ist die Laufzeit des Signals proportional zum Abstand des Signalgenerators bzw. der Auswerteelektronik zur Oberfläche des in dem Behälter befindlichen Mediums. Sich verändernde Umgebungsbedingungen, wie ein steigender oder ein fallender Umgebungsdruck oder eine steigende oder eine fallende Temperatur, beeinträchtigen die Meßgenauigkeit des TDR-Füllstandsmeßgeräts nicht. Außerdem ist die Laufzeit des Signals unabhängig von der Dielektrizitätszahl des Mediums, dessen Füllstand gemessen werden soll.

Ein Füllstandsmeßgerät, wie eingangs beschrieben, ist z.B. aus der DE 100 37 715 A1 bekannt. Bei dem dort beschriebenen Füllstandsmeßgerät ist eine in den Behälter reichende Leiteranordnung vorgesehen, die am oberen Ende des Behälters in eine dort Sensor genannte Einrichtung mündet, die so ausgebildet ist, daß eine Füllstandsmessung mit wenigstens zwei voneinander verschiedenen Meßverfahren möglich ist. Dazu kann der Sensor in wenigstens zwei voneinander verschiedenen Betriebsmodi arbeiten, insbesondere kann nämlich einerseits eine Füllstandsmessung nach dem Radarprinzip und andererseits eine Füllstandsmessung aufgrund einer Kapazitätsmessung erfolgen. Kommen diese beiden Meßverfahren abwechselnd oder gleichzeitig zum Einsatz, so läßt sich eine Plausibilitätsprüfung durchführen, nämlich derart, daß, wenn die Abweichung zwischen den nach den jeweiligen Verfahren ermittelten Füllstandwerten einen vorgegebenen Toleranzbereich übersteigt, eine entsprechende Warnmeldung ausgegeben wird.

Ausgehend von dem zuvor beschriebenen Stand der'Technik ist es die Aufgabe der Erfindung, ein Füllstandsmeßgerät mit einer erhöhten Funktionalität anzugeben.

Die zuvor hergeleitete und aufgezeigte Aufgabe ist ausgehend von dem eingangs beschriebenen Füllstandsmeßgerät dadurch gelöst, daß ein von der Leiteranordnung verschiedener Meßwertaufnehmer zur Messung einer weiteren physikalischen Größe vorgesehen ist.

Grundsätzlich ist auch die Leiteranordnung als ein solcher Meßwertaufnehmer verwendbar, mit dem eine weitere physikalische Größe bestimmbar ist, indem nämlich z.B. eine Kapazitätsmessung durchgeführt wird. Erfindungsgemäß ist nun ein zusätzlicher Meßwertaufnehmer vorgesehen, mit dem z.B. die Messung einer Temperatur, eines Drucks oder einer Leitfähigkeit möglich ist. Mit dem erfindungsgemäßen Füllstandsmeßgerät wird dem Verwender also eine zusätzliche Funktion an die Hand gegeben. Ohne den Einsatz einer zusätzlichen und damit separaten Meßvorrichtung wird ihm nämlich schon durch das erfindungsgemäße Füllstandsmeßgerät selbst wenigstens ein weiterer für ihn interessanter Meßwert zur Verfügung gestellt. Zur Ausgabe der von dem Meßwertaufnehmer erfaßten weiteren physikalischen Größe ist dann gemäß einer bevorzugten Weiterbildung der Erfindung eine zweite Datenausgabeschnittstelle vorgesehen. Selbstverständlich ist die Erfindung dabei nicht darauf beschränkt, lediglich einen weiteren Meßwert zur Verfügung zu stellen. Es können also auch zwei oder mehr weitere Meßwerte gemessen und ausgegeben werden, wozu dementsprechend zwei oder mehr Meßwertaufnehmer vorgesehen sind.

Bezüglich der Anordnung des Meßwertaufnehmers kommen verschiedene Möglichkeiten in Betracht. Gemäß einer bevorzugten Weiterbildung der Erfindung ist jedoch vorgesehen, daß der Meßwertaufnehmer an der Leiteranordnung befestigt ist. Gemäß einer besonders bevorzugten Weiterbildung der Erfindung ist der Meßwertaufnehmer dabei von der Leiteranordnung lösbar.

Wie weiter oben schon ausgeführt, kann die Leiteranordnung als Einfachleiter oder als Doppelleiter ausgebildet sein. Ist die Leiteranordnung als Einfachleiter ausgebildet, insbesondere nämlich als Leiterrohr oder als Leiterkabel, so ist gemäß einer bevorzugten Weiterbildung der Erfindung vorgesehen, daß eine zu dem Meßwertaufnehmer führende Innenleitung isoliert von dem Einfachleiter in dem Einfachleiter verläuft. Dabei ist es besonders bevorzugt, daß der Einfachleiter als eine Zuleitung zu dem Meßwertaufnehmer ausgebildet ist, so daß über den Einfachleiter eine Daten- und/oder Energieübertragung von bzw. zu dem Meßwertaufnehmer möglich ist, wobei das von dem Signalgenerator erzeugte elektromagnetische Signal kapazitiv in den Einfachleiter einkoppelbar ist. Damit ist eine "Eindrahtleitung" zu dem Meßwertaufnehmer realisierbar, wenn dieser zusätzlich mit einem Referenzpotential, wie Masse, verbunden ist. Diesbezüglich ist es gemäß einer bevorzugten Weiterbildung der Erfindung vorgesehen, daß die isoliert von dem Einfachleiter innerhalb des Einfachleiters zu dem Meßwertaufnehmer führende Innenleitung als Referenzpotentialverbindung, vorzugsweise Masseverbindung, dient.

Ist die Leiteranordnung als Doppelleiter mit zwei Leitern, nämlich als Parallelleitung oder als Koaxialleitung, ausgebildet, so ist gemäß einer bevorzugten Weiterbildung der Erfindung vorgesehen, daß einer der Leiter als eine Zuleitung zu dem Meßwertaufnehmer ausgebildet ist, so daß über den als Zuleitung zu dem Meßwertaufnehmer dienenden Leiter eine Daten- und/oder Energieübertragung von bzw. zu dem Meßwertaufnehmer möglich ist, wobei das von dem Signalgenerator erzeugte elektromagnetische Signal kapazitiv in den als Zuleitung zu dem Meßwertaufnehmer dienenden Leiter einkoppelbar ist. Auch hier ist eine "Eindrahtleitung" zu dem Meßwertaufnehmer realisierbar, und zwar dadurch, daß der Meßwertaufnehmer mit einem Referenzpotential, wie Masse verbunden wird. Gemäß einer bevorzugten Weiterbildung der Erfindung ist dazu der von dem als Zuleitung zu dem Meßwertaufnehmer dienende Leiter verschiedene Leiter als Referenzpotentialverbindung, vorzugsweise als Masseverbindung, für den Meßwertaufnehmer ausgebildet. Bei der Verwendung eines Koaxialkabels kommt insbesondere der Außenleiter als Referenzpotentialverbindung in Betracht.

Insbesondere bei der Verwendung eines flexiblen Kabels als Leiteranordnung ist im Endbereich der Leiteranordnung im allgemeinen ein Gewicht vorgesehen, um einen möglichst geraden Verlauf der Leiteranordnung in dem Behälter zu gewährleisten. Bei der Anordnung eines Gewichts im Endbereich der Leiteranordnung ist gemäß einer bevorzugten Weiterbildung der Erfindung vorgesehen, daß der Meßwertaufnehmer an oder in dem Gewicht angeordnet ist. Gegebenenfalls kann der Meßwertaufnehmer, z.B. zusammen mit seinem Gehäuse, das Gewicht ersetzen bzw. ergänzend als Gewicht dienen, wodurch der Aufbau des Füllstandsmeßgeräts insgesamt vereinfacht wird.

Mit dem erfindungsgemäß zusätzlich vorgesehenen Meßwertaufnehmer können solche physikalischen Größen erfaßt werden, die einem Verwender des erfindungsgemäßen Füllstandsmeßgeräts lediglich eine Zusatzinformation geben, z.B. bezüglich der Temperatur des in dem Behälter befindlichen Mediums. Gemäß einer bevorzugten Weiterbildung der Erfindung ist jedoch eine zusätzliche Füllstandsbestimmungseinrichtung vorgesehen, der die von dem Meßwertaufnehmer erfaßte weitere physikalische Größe zuführbar ist und von der aufgrund der weiteren erfaßten physikalischen Größe eine alternative Füllstandsbestimmung durchführbar ist. Dies ist z.B. dann möglich, wenn als zusätzlicher Meßwertaufnehmer ein Druckaufnehmer verwendet wird, der nach Möglichkeit am Ende der Leiteranordnung in der Nähe des Bodens des Behälters vorgesehen ist, so daß eine alternative Füllstandsbestimmung über den Druck durchführbar ist, der aufgrund des über dem Druckaufnehmer lagernden Mediums besteht.

Ein mit einer solchen zusätzlichen Füllstandsbestimmungseinrichtung ausgerüstetes Füllstandsmeßgerät ist dann gemäß einer bevorzugten Weiterbildung der Erfindung vorzugsweise mit einer Prüfeinrichtung versehen, der einerseits der mittels der nach dem Radarprinzip erfolgenden Messung ermittelte Füllstand und andererseits der mittels der weiteren physikalischen Größe aufgrund der alternativen Füllstandsbestimmung ermittelte Füllstand zuführbar ist und in der diese beiden Füllstandswerte zur Prüfung der Verläßlichkeit des mittels der nach dem Radarprinzip erfolgenden Messung ermittelten Füllstands miteinander vergleichbar sind. Bei einer einen vorgegebenen Referenzwert übersteigenden Abweichung der beiden Füllstandswerte voneinander kann dem Verwender des Füllstandsmeßgeräts eine Meldung ausgegeben werden, die ihn darauf hinweist, daß möglicherweise eine Fehlfunktion des Füllstandsmeßgeräts vorliegt, so daß eine Prüfung zu erfolgen hat.

Im einzelnen gibt es nun eine Vielzahl von Möglichkeiten, das erfindungsgemäße Füllstandsmeßgerät auszugestalten und weiterzubilden. Dazu wird auf die dem Patentanspruch 1 nachgeordneten Patentansprüche sowie auf die nachfolgende detaillierte Beschreibung bevorzugter Ausführungsbeispiele der Erfindung unter Bezugnahme auf die Zeichnung verwiesen. In der Zeichnung zeigt
- Fig. 1: schematisch den Aufbau eines Füllstandsmeßgeräts gemäß einem ersten bevorzugten Ausführungsbeispiel der Erfindung,
- Fig. 2: schematisch den Aufbau eines Füllstandsmeßgeräts gemäß einem zweiten bevorzugten Ausführungsbeispiel der Erfindung,
- Fig. 3: schematisch den Aufbau eines Füllstandsmeßgerät gemäß einem dritten bevorzugten Ausführungsbeispiel der Erfindung,
- Fig. 4: schematisch den Aufbau eines Füllstandsmeßgeräts gemäß einem vierten bevorzugten Ausführungsbeispiels der Erfindung,
- Fig. 5: schematisch den Aufbau eines Füllstandsmeßgeräts gemäß einem fünften bevorzugten Ausführungsbeispiel der Erfindung und
- Fig. 6: schematisch den Aufbau eines Füllstandsmeßgeräts gemäß einem sechsten bevorzugten Ausführungsbeispiel der Erfindung.

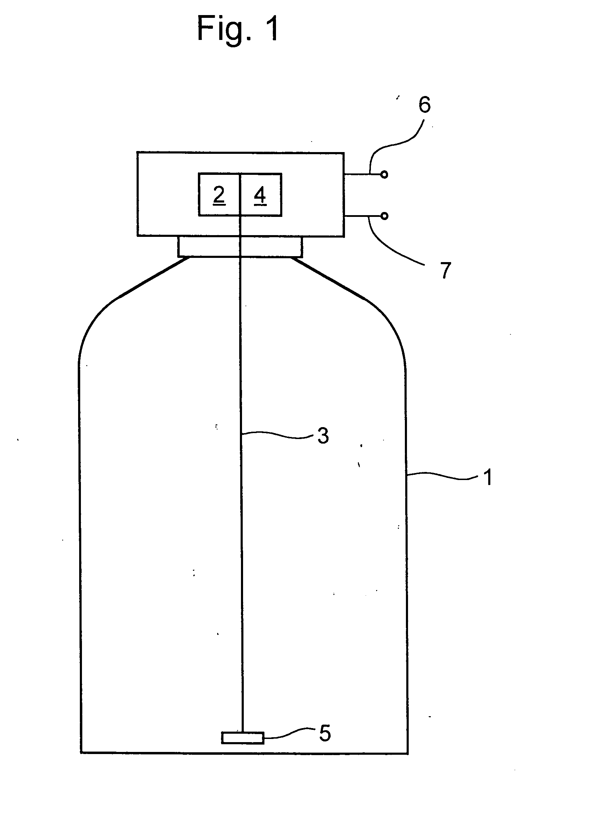

Aus Fig. 1 ist ein Füllstandsmeßgerät gemäß einem ersten bevorzugten Ausführungsbeispiel der Erfindung ersichtlich. Das Füllstandsmeßgerät wird für einen Behälter 1 verwendet, in den ein nicht weiter dargestelltes Medium eingefüllt werden kann. Das Füllstandsmeßgerät weist einen Signalgenerator 2 auf, mit dem ein elektromagnetisches Signal, nämlich ein kurzer Mikrowellenimpuls, erzeugt werden kann. Dieses elektromagnetische Signal wird dann in eine elektrische Leiteranordnung 3 eingekoppelt, die fast bis zum Boden des Behälters 1 in diesen hinein reicht. Das elektromagnetische Signal wird also längs der Leiteranordnung 3 geführt und an der Oberfläche eines in den Behälter 1 eingefüllten Mediums zumindest teilweise zurückreflektiert. Dieser zurückreflektierte Anteil des elektromagnetischen Signals wird dann über die elektrische Leiteranordnung 3 einer Auswerteelektronik 4 zugeführt, mit der die Laufzeit des elektromagnetischen Signals vom Signalgenerator 2 zur Oberfläche des Mediums und zurück zur Auswerteelektronik 4 und damit der Füllstand des Mediums in dem Behälter 1 ermittelt werden kann. Am unteren Ende der Leiteranordnung 3 ist ein Meßwertaufnehmer 5 zur Messung der Temperatur vorgesehen. Damit stellt das Füllstandsmeßgerät gemäß dem ersten bevorzugten Ausführungsbeispiel der Erfindung zwei Meßwerte zur Verfügung, nämlich über eine erste Datenausgabeschnittstelle 6 den Füllstand des Mediums in dem Behälter 1 und über eine zweite Datenausgabeschnittstelle 7 die von dem Meßwertaufnehmer 5 ermittelte Temperatur.

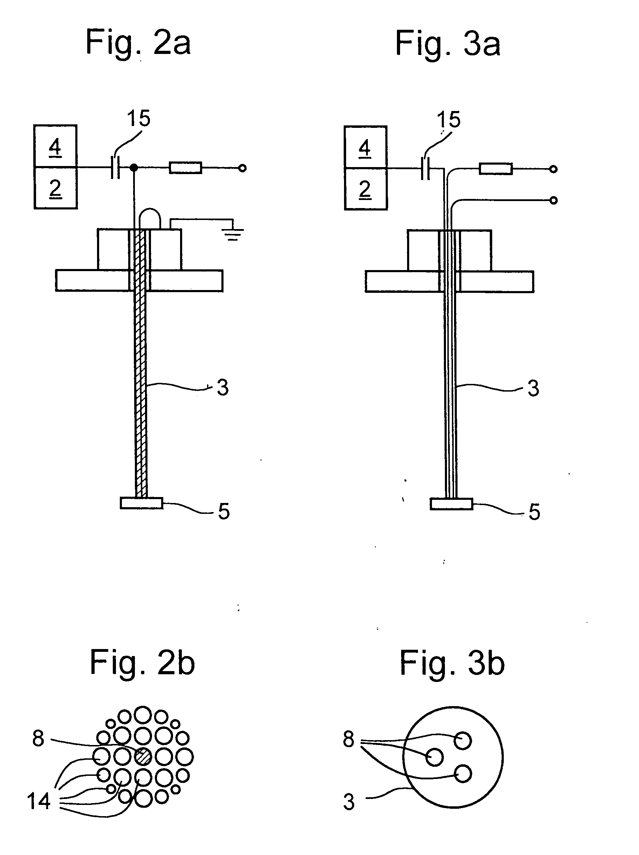

Aus Fig. 2 ist nun ein Füllstandsmeßgerät gemäß einem zweiten bevorzugten Ausführungsbeispiel ersichtlich. Dieses Füllstandsmeßgerät weist als Leiteranordnung 3 einen Einfachleiter auf, nämlich ein Leiterkabel, das aus einer Mehrzahl von Leitungsadern 14 besteht. Im wesentlichen zentral in dem Leiterkabel und somit von den Leitungsadern 14 umgeben verläuft eine zu dem Meßwertaufnehmer 5 führende Innenleitung 8, und zwar isoliert von den Leitungsadern 14 des Leiterkabels. Gemäß dem vorliegend beschriebenen Füllstandsmeßgeräts gemäß dem zweiten bevorzugten Ausführungsbeispiel der Erfindung wird das Leiterkabel als eine Zuleitung zu dem Meßwertaufnehmer 5 verwendet, so daß über das Leiterkabel eine Daten- und/oder Energieübertragung von bzw. zu dem Meßwertaufnehmer 5 möglich ist. Dazu ist vorgesehen, daß das von dem Signalgenerator 2 erzeugte elektromagnetische Signal kapazitiv in das Leiterkabel einkoppelbar ist, nämlich über einen Kondensator 15. Eine "Eindrahtleitung" zum Meßwertaufnehmer 5 wird nun dadurch realisiert, daß die Innenleitung 8 als Masseverbindung zu dem Meßwertaufnehmer 5 dient, wie in Fig. 2 schematisch angedeutet.

Aus Fig. 3 ist ein Füllstandsmeßgerät gemäß einem dritten bevorzugten Ausführungsbeispiel ersichtlich. Bei diesem Füllstandsmeßgerät ist als Leiteranordnung 3 ein Leiterrohr vorgesehen. Innerhalb des Leiterrohrs können eine Mehrzahl von Innenleitungen 8 geführt sein, nämlich ebenfalls, wie beim Füllstandsmeßgerät gemäß dem zweiten bevorzugten Ausführungsbeispiel der Erfindung, isoliert von der Leiteranordnung 3. Auch gemäß dem dritten bevorzugten Ausführungsbeispiel der Erfindung ist eine Einkopplung des von dem Signalgenerator 2 erzeugten elektromagnetischen Signals in die Leiteranordnung 3, nämlich das Leiterrohr, über einen Kondensator 15 vorgesehen. Da jedoch in dem Leiterrohr eine Mehrzahl von Innenleitungen 8 geführt werden können, kann auf diese Weise nicht nur eine "Eindrahtleitung" zu dem Meßwertaufnehmer 5 realisiert werden. Andererseits kann auf diese Weise auch eine Mehrzahl von Meßwertaufnehmern 5 vorgesehen werden.

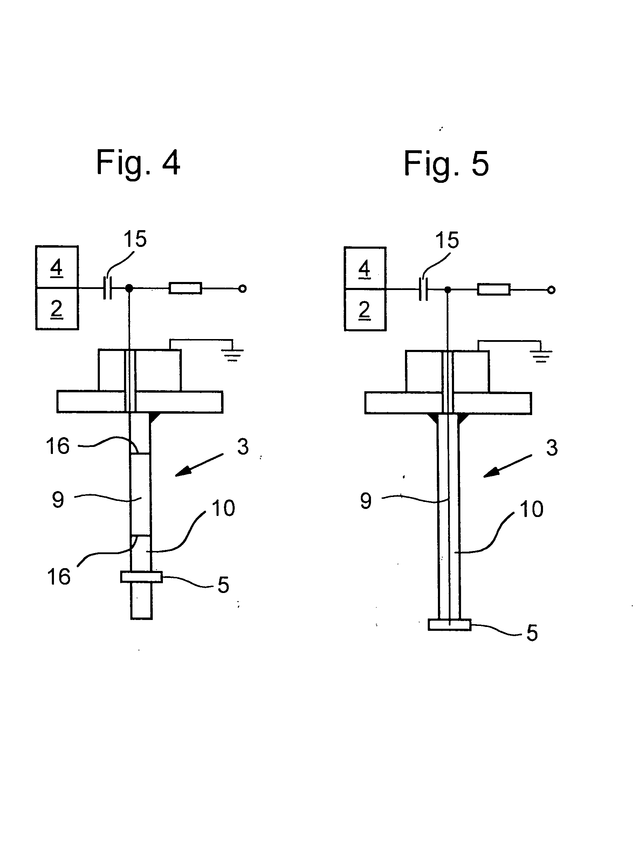

Aus Fig. 4 ist ein Füllstandsmeßgerät gemäß einem vierten bevorzugten Ausführungsbeispiel der Erfindung ersichtlich. Bei diesem Füllstandsmeßgerät handelt es sich um ein solches, das als Leiteranordnung 3 einen Doppelleiter mit Leitern 9,10 aufweist. Zwischen den Leitern 9, 10 sind Abstandshalter 16 vorgesehen, und etwas oberhalb des unteren Endes der Leiteranordnung 3 ist der Meßwertaufnehmer 5 angebracht. Bei dem Füllstandsmeßgerät gemäß dem vierten bevorzugten Ausführungsbeispiel der Erfindung dient der Leiter 9 als Zuleitung zu dem Meßwertaufnehmer 5, so daß über den Leiter 9 eine Daten- und/oder Energieübertragung von bzw. zu dem Meßwertaufnehmer 5 möglich ist. Dazu ist, ähnlich wie schon zuvor beschrieben, das von dem Signalgenerator 2 erzeugte elektromagnetische Signal kapazitiv, nämlich über einen Kondensator 15, in den Leiter 9 einkoppelbar. Zur Realisierung einer "Eindrahtleitung" zum Meßwertaufnehmer 5 dient der andere Leiter 10 des Doppelleiters als Masseverbindung, wie in Fig. 4 schematisch dargestellt.

Aus Fig. 5 ist ein Füllstandsmeßgerät gemäß einem fünften bevorzugten Ausführungsbeispiel der Erfindung ersichtlich. Dieses Füllstandsmeßgerät weist als Leiteranordnung 3 nun eine Koaxialleitung auf, wobei vorgesehen ist, daß der eine Leiter 9, nämlich der Innenleiter, eine Zuleitung zu dem Meßwertaufnehmer 5 bildet. Dazu ist auch hier das von dem Signalgenerator 2 erzeugte elektromagnetische Signal kapazitiv, nämlich über einen Kondensator 15 in den Leiter 5 einkoppelbar. Der Leiter 10, nämlich der Außenleiter der Koaxialleitung, dient dann zur Realisierung einer "Eindrahtverbindung" zu dem Meßwertaufnehmer 5 als Masseverbindung.

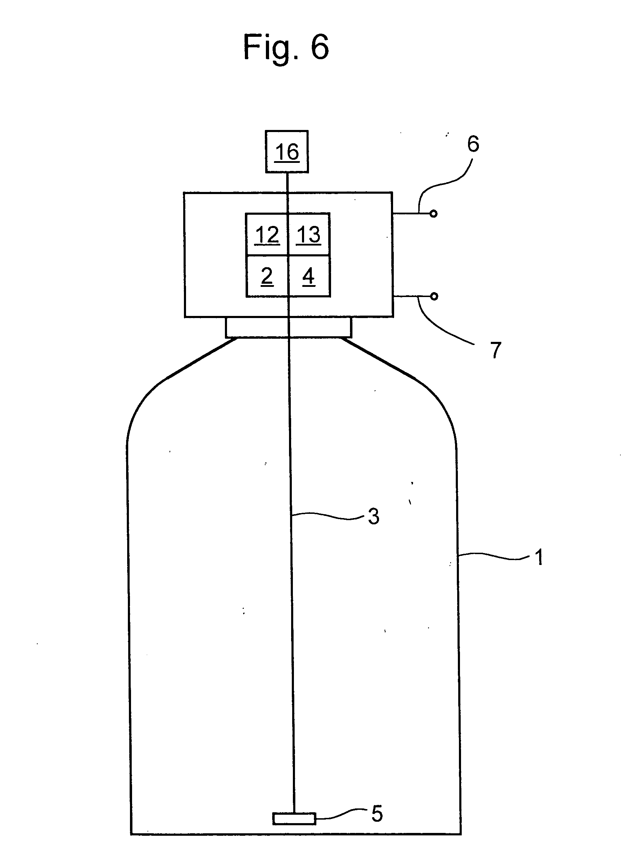

Aus Fig. 6 ist schließlich ein Füllstandsmeßgerät gemäß einem sechsten bevorzugten Ausführungsbeispiel der Erfindung ersichtlich. Bei diesem Füllstandsmeßgerät sind zusätzlich eine Füllstandsbestimmungseinrichtung 12, eine Prüfeinrichtung 13 und eine Ausgabeeinrichtung 16 vorgesehen.

Der zusätzlich vorgesehenen Füllstandsbestimmungsvorrichtung 12 ist die von dem Meßwertaufnehmer 5, vorliegend einem Druckaufnehmer, erfaßte weitere physikalische Größe, nämlich der am Ort der Anbringung des Meßwertaufnehmers 5 aufgrund des in den Behälter 1 eingefüllten Mediums herrschende Druck, zuführbar. Da dieser Druckwert ebenfalls ein Maß für den Füllstand des Mediums in dem Behälter 1 ist, kann von der Füllstandsbestimmungseinrichtung 12 damit eine alternative Füllstandsbestimmung durchgeführt werden.

Der mittels dieser alternativen Füllstandsbestimmung ermittelte Füllstandswert, der auf dem von dem Meßwertaufnehmer 5 ermittelten Druck beruht, wird dann der Prüfeinrichtung 13 zugeführt. Der Prüfeinrichtung 13 wird außerdem der mittels der Laufzeitmessung in der Auswertelektronik 4 ermittelte Füllstandswert zugeführt. In der Prüfeinrichtung 13 kann somit ein Vergleich dieser beiden Füllstandswerte erfolgen, so daß die Verläßlichkeit des mittels der Laufzeitmethode ermittelten Füllstandswertes geprüft werden kann. Ist die Abweichung zwischen den beiden auf unterschiedliche Weisen gemessenen Füllstandswerte größer als ein vorbestimmter Referenzwert, so wird über die Ausgabeeinrichtung 16 an den Verwender des Füllstandsmeßgeräts gemäß dem sechsten bevorzugten Ausführungsbeispiel der Erfindung eine Warnung ausgegeben, die den Verwender veranlaßt, eine Prüfung des Füllstandsmeßgeräts durchzuführen.

## Patentansprüche

1. Füllstandsmeßgerät, das nach dem Radarprinzip arbeitet, zum Messen des Füllstands eines in einen Behälter (1) eingefüllten Mediums, mit einem Signalgenerator (2) zum Erzeugen und Aussenden eines elektromagnetischen Signals, einer elektrischen Leiteranordnung (3) zum Führen des von dem Signalgenerator (2) erzeugten elektromagnetischen Signals in den Behälter (1) und zum Zurückführen des an dem in den Behälter (1) eingefüllten Medium reflektierten Anteils des elektromagnetischen Signals und einer Auswerteelektronik (4) zum Empfangen des an dem in den Behälter (1) eingefüllten Medium reflektierten Anteils des elektromagnetischen Signals und zum Ermitteln dessen Laufzeit und damit des Füllstands des Mediums in dem Behälter (1), **dadurch gekennzeichnet, daß** ein von der Leiteranordnung (3) verschiedener Meßwertaufnehmer (5) zur Messung einer weiteren physikalischen Größe vorgesehen ist.

2. Füllstandsmeßgerät nach Anspruch 1, **dadurch gekennzeichnet, daß** der Meßwertaufnehmer (5) zur Messung einer Temperatur, eines Drucks oder einer Leitfähigkeit vorgesehen ist.

3. Füllstandsmeßgerät nach Anspruch 1 oder 2, **dadurch gekennzeichnet, daß** zur Ausgabe der von dem Meßwertaufnehmer (5) erfaßten weiteren physikalischen Größe eine Datenausgabeschnittstelle (7) vorgesehen ist.

4. Füllstandsmeßgerät nach einem der Ansprüche 1 bis 3, **dadurch gekennzeichnet, daß** der Meßwertaufnehmer (5) an der Leiteranordnung (3), vorzugsweise lösbar, befestigt ist.

5. Füllstandsmeßgerät nach einem der Ansprüche 1 bis 4, **dadurch gekennzeichnet, daß** die Leiteranordnung (3) als Einfachleiter, vorzugsweise als Leiterrohr oder als Leiterkabel, ausgebildet ist und eine zu dem Meßwertaufnehmer (5) führende Innenleitung (8) isoliert von dem Einfachleiter innerhalb des Einfachleiters verläuft.

6. Füllstandsmeßgerät nach Anspruch 5, **dadurch gekennzeichnet, daß** der Einfachleiter als eine Zuleitung zu dem Meßwertaufnehmer (5) ausgebildet ist, so daß über den Einfachleiter eine Daten- und/oder Energieübertragung von bzw. zu dem Meßwertaufnehmer (5) möglich ist, wobei das von dem Signalgenerator (2) erzeugte elektromagnetische Signal kapazitiv in den Einfachleiter einkoppelbar ist.

7. Füllstandsmeßgerät nach Anspruch 5 oder 6, **dadurch gekennzeichnet, daß** die isoliert von dem Einfachleiter innerhalb des Einfachleiters zu dem Meßwertaufnehmer (5) führende Innenleitung (8) als Referenzpotentialverbindung, vorzugsweise Masseverbindung, dient.

8. Füllstandsmeßgerät nach einem der Ansprüche 1 bis 4, **dadurch gekennzeichnet, daß** die Leiteranordnung (3) als Doppelleiter mit zwei Leitern (9, 10), vorzugsweise als Parallelleitung oder als Koaxialleitung, ausgebildet ist, einer der Leiter (9, 10) als eine Zuleitung zu dem Meßwertaufnehmer (5) ausgebildet ist, so daß über den als Zuleitung zu dem Meßwertaufnehmer dienenden Leiter (9) eine Daten- und/oder Energieübertragung von bzw. zu dem Meßwertaufnehmer (5) möglich ist, wobei das von dem Signalgenerator (2) erzeugte elektromagnetische Signal kapazitiv in den als Zuleitung zu dem Meßwertaufnehmer (5) dienenden Leitern (9) einkoppelbar ist.

9. Füllstandsmeßgerät nach Anspruch 8, **dadurch gekennzeichnet, daß** der von dem als Zuleitung zu dem Meßwertaufnehmer (5) dienenden Leiter (9) verschiedene Leiter (10) als Referenzpotentialverbindung, vorzugsweise Masseverbindung, dient.

10. Füllstandsmeßgerät nach einem der Ansprüche 1 bis 9, **dadurch gekennzeichnet, daß** im Endbereich der Leiteranordnung (3) ein Gewicht (11) vorgesehen ist und der Meßwertaufnehmer (5) an oder in dem Gewicht (11) angeordnet ist.

11. Füllstandsmeßgerät nach einem der Ansprüche 1 bis 10, **dadurch gekennzeichnet, daß** eine zusätzliche Füllstandsbestimmungseinrichtung (12) vorgesehen ist, der die von dem Meßwertaufnehmer erfaßte weitere physikalische Größe zuführbar ist und von der aufgrund der weiteren erfaßten physikalischen Größe eine alternative Füllstandsbestimmung durchführbar ist.

12. Füllstandsmeßgerät nach Anspruch 11, **dadurch gekennzeichnet, daß** eine Prüfeinrichtung (13) vorgesehen ist, der einerseits der mittels der nach dem Radarprinzip erfolgenden Messung ermittelte Füllstand und andererseits der mittels der weiteren physikalischen Größe aufgrund der alternativen Füllstandsbestimmung ermittelte Füllstand zuführbar ist und in der diese beiden Füllstandswerte zur Prüfung der Verläßlichkeit des mittels der nach dem Radarprinzip erfolgenden Messung ermittelten Füllstands miteinander vergleichbar sind.
